(19) **Europäisches Patentamt / European Patent Office / Office européen des brevets**

(11) **EP 4 513 383 A1**

(12) **EUROPEAN PATENT APPLICATION**
published in accordance with Art. 153(4) EPC

(43) Date of publication:
26.02.2025 Bulletin 2025/09

(21) Application number: 23802429.3

(22) Date of filing: 31.01.2023

(51) International Patent Classification (IPC):
*G06N 3/067* (2006.01)

(52) Cooperative Patent Classification (CPC):
G06N 3/0464; G06N 3/067; G06N 3/08

(86) International application number:
PCT/CN2023/074020

(87) International publication number:
WO 2023/216653 (16.11.2023 Gazette 2023/46)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 11.05.2022 CN 202210510603

(71) Applicant: Huawei Technologies Co., Ltd.
Shenzhen, Guangdong 518129 (CN)

(72) Inventors:
• YANG, Jiamiao
  Shanghai 200240 (CN)
• HE, Qiaozhi
  Shanghai 200240 (CN)
• LI, Jingwei
  Shenzhen, Guangdong 518129 (CN)
• SHAO, Rongjun
  Shanghai 200240 (CN)
• DONG, Xiaowen
  Shenzhen, Guangdong 518129 (CN)
• FANG, Tao
  Shenzhen, Guangdong 518129 (CN)

(74) Representative: Pfenning, Meinig & Partner mbB
Patent- und Rechtsanwälte
Theresienhöhe 11a
80339 München (DE)

(54) **OPTICAL COMPUTING TOPOLOGICAL STRUCTURE, SYSTEM AND REGULATION AND CONTROL METHOD FOR SYSTEM**

(57) Embodiments of this application provide an optical computing topology structure, a system, and a system regulation method, to implement large-scale adjustment of a topology structure for different application scenarios. The optical computing topology structure specifically includes a first physical medium, a spatial light modulator, and a second physical medium. The first physical medium, the spatial light modulator, and the second physical medium are sequentially connected. The first physical medium is configured to mix an input optical field, to implement a fully connected topology of the input optical field to obtain a to-be-modulated optical field. The spatial light modulator is configured to modulate an optical field parameter of the to-be-modulated optical field to obtain a to-be-output optical field. The second physical medium is configured to mix the to-be-output optical field, to implement a fully connected topology of the to-be-output optical field to obtain an output optical field.

FIG. 1

## Description

This application claims priority to Chinese Patent Application No. 202210510603.0, filed with the China National Intellectual Property Administration on May 11, 2022 and entitled "OPTICAL COMPUTING TOPOLOGY STRUCTURE, SYSTEM, AND SYSTEM REGULATION METHOD", which is incorporated herein by reference in its entirety.

## TECHNICAL FIELD

This application relates to the field of optical computing, and in particular, to an optical computing topology structure, a system, and a system regulation method.

## BACKGROUND

Artificial intelligence technologies represented by deep neural networks have been successfully applied to fields such as autonomous driving, medical diagnosis, and natural language processing. Large-scale matrix-vector multiplication is a basic computing operation in a neural network training and inference process. As a scale of a neural network increases, for an electronic computing device based on a Von Neumann architecture, the operation needs to occupy a large amount of memory space, computing power consumption is high, and a computing speed is low. At present, researchers find that matrix-vector multiplication in an artificial neural network can be performed at a high speed and low power consumption, and in high parallel by using an optical system. In recent years, an optoelectronic hybrid neural network has become a frontier research field of the artificial intelligence technologies.

There is a long way to go before an existing optoelectronic hybrid neural network system is actually applied. A main reason is that complexity of an optical neural network model is low, and it is difficult to set a neural network model with a special topology structure for a specific task requirement. The optical neural network model is usually constructed by using a physical medium or a passive diffractive optical element. The physical medium and most passive diffractive optical elements have static topology structures, and it is difficult to optimize the topology structures of the physical medium and most passive diffractive optical elements for specific tasks. Although some diffractive optical elements including spatial light modulators can adjust parameters, adjustment space of the parameters is limited. Consequently, topology structure control cannot be implemented, and costs are high when a complex network structure is implemented.

Therefore, currently, an optical computing topology structure that can adjust the topology structure in a large scale is urgently needed.

## SUMMARY

Embodiments of this application provide an optical computing topology structure, a system, and a system regulation method, to implement large-scale adjustment of a topology structure for different application scenarios.

According to a first aspect, this application provides an optical computing topology structure, specifically including a first physical medium, a spatial light modulator, and a second physical medium. The first physical medium, the spatial light modulator, and the second physical medium are sequentially connected. The first physical medium is configured to mix an input optical field, to implement a fully connected topology of the input optical field to obtain a to-be-modulated optical field. The spatial light modulator is configured to modulate an optical field parameter of the to-be-modulated optical field to obtain a to-be-output optical field. The second physical medium is configured to mix the to-be-output optical field, to implement a fully connected topology of the to-be-output optical field to obtain an output optical field.

In the optical computing topology structure provided in embodiments, after the first physical medium and the second physical medium mix the optical fields, the fully connected topology is implemented at each location of the optical field, and therefore, correlation between locations of the optical field is low. As a result, elements in a transmission matrix are independent, and a parameter adjustment range of the spatial light modulator is expanded, so that the optical computing topology structure is regulated in a large scale.

In a possible implementation, the first physical medium is a scattering medium, a diffractive optical element, or a multi-mode optical fiber; and the second physical medium is a scattering medium, a diffractive optical element, or a multi-mode optical fiber. This increases feasibility of the solutions.

In another possible implementation, the scattering medium is a glass substrate coated with zinc oxide or titanium oxide.

In another possible implementation, the spatial light modulator is a liquid crystal spatial light modulator (spatial light modulator, SLM), a digital micromirror device (digital mirror device, DMD), or a programmable diffractive surface. This increases feasibility of the solutions.

According to a second aspect, this application provides an optoelectronic computing system based on an optical computing topology structure, specifically including a light source device, a spatial light modulator, an optical computing topology structure, a detector, and a computing device. The optical computing topology structure has a function according to any one of claims 1 to 4. The light source device, the spatial light modulator, the optical computing topology structure, the detector, and the computing device are sequentially connected, and the computing device is further connected to the spatial light modulator and the optical computing topology structure.

The light source device is configured to output a light source.

The spatial light modulator is configured to load an input signal on the light source, so that the input signal is converted from an electrical signal into an optical signal.

The optical computing topology structure is configured to perform parameter modulation on the optical signal, to output a target optical field.

The detector is configured to detect the target optical field output by the optical computing topology structure, to generate a picture.

The computing device is configured to: control a modulation mode of the spatial light modulator and a modulation mode of a spatial light modulator in the optical computing topology structure, and process the picture output by the detector.

In the technical solutions provided in embodiments, the optical computing topology structure has a function of the optical computing topology structure according to the first aspect. In this way, the optical field may be mixed in the optical computing topology structure, so that a fully connected topology at each location of the optical field is implemented, and therefore, correlation between locations of the optical field is low. As a result, elements in a transmission matrix are independent, and a parameter adjustment range of the optical computing topology structure is expanded, so that the optical computing topology structure is regulated in a large scale. In this way, applicability of the optical computing system to different application scenarios is improved.

In a possible implementation, the optoelectronic computing system further includes a focus device, the focus device is located between the optical computing topology structure and the detector, and the focus device is configured to: focus on the target optical field, and output a focused target optical field to the detector. In this way, effect of the output optical field can be better, thereby ensuring that a result detected by the detector is more accurate.

In another possible implementation, the focus device is a lens or a lens group. In this way, feasibility of the solutions can be improved.

In another possible implementation, the optoelectronic computing system further includes a collimated beam expansion system. The collimated beam expansion system is located between the light source device and the spatial light modulator. The collimated beam expansion system is configured to perform beam expansion on the light source output by the light source device, to enable the light source to reach a target aperture.

In another possible implementation, the spatial light modulator is a liquid crystal SLM, a DMD, or a programmable diffractive surface.

In another possible implementation, the detector is a planar array complementary oxide semiconductor (complementary metal oxide semiconductor, CMOS) camera or a planar array charge-coupled device (charge-coupled device, CCD) camera.

According to a third aspect, this application provides a regulation method for an optoelectronic computing system. The method is mainly applied to the optoelectronic computing system described in the second aspect, and the method mainly includes: The computing device generates a first regulation signal and a second regulation signal.

The computing device loads the first regulation signal to the optical computing topology structure, so that the optical computing topology structure generates a first transmission matrix. The computing device loads the second regulation signal to the spatial light modulator, to obtain the first transmission matrix through measurement. The computing device determines whether the first transmission matrix meets a preset condition, and if the first transmission matrix does not meet the preset condition, generates a third regulation signal according to an optimization algorithm. The computing device loads the third regulation signal to the optical computing topology structure, so that the optical computing topology structure generates a second transmission matrix. The computing device loads the second regulation signal to the spatial light modulator, to obtain the second transmission matrix through measurement. When the second transmission matrix does not meet the preset condition, a fourth regulation signal that meets the preset condition is obtained through sequential repeated computing, where the fourth regulation signal is a regulation signal loaded to the optical computing topology structure. The computing device determines that the fourth regulation signal is a loading mode of the optical computing topology structure, and that the second regulation signal is a loading mode of the spatial light modulator.

In the technical solutions provided in embodiments, the optical computing topology structure has a function of the optical computing topology structure according to the first aspect. In this way, the optical field may be mixed in the optical computing topology structure, so that a fully connected topology at each location of the optical field is implemented, and therefore, correlation between locations of the optical field is low. As a result, elements in a transmission matrix are independent, and a parameter adjustment range of the optical computing topology structure is expanded, so that the optical computing topology structure is regulated in a large scale. In this way, application scenarios of the optical computing system are increased. A specific regulation manner is to compare the transmission matrix generated by computing the optical computing topology structure with a transmission matrix required in an application scenario, and determine the optical computing topology structure and the regulation signal loaded on the spatial light modulator if the preset condition is met.

In a possible implementation, a manner in which the computing device may obtain the transmission matrix of the optical computing topology structure through computing may be as follows:

The computing device sequentially loads signals in the second regulation signal to the spatial light modulator, to obtain a plurality of output optical fields;

the computing device obtains an amplitude set of the plurality of output optical fields that are sequentially output by the detector;

the computing device integrates the second regulation signal into an $m \times n$ first matrix, and integrates the amplitude set into an $m \times n$ second matrix, where m and n are positive integers; and

obtaining the first transmission matrix through computing based on the first matrix and the second matrix.

In another possible implementation, a manner in which the computing device determines whether the first transmission matrix meets the preset condition may be as follows:

The computing device determines, according to a first formula, whether the first transmission matrix meets the preset condition, where the first formula is $T = G \cdot A$, $\cdot$ represents element-wise multiplication, G represents a dense complex Gaussian random matrix, A represents a connection relationship between each element and another element in G, and T represents the first transmission matrix; and

the preset condition is that A meets small-world distribution.

In another possible implementation, a process in which the computing device generates a new regulation signal may be as follows:

The computing device randomly generates M $x \times y$ random arrays, where x, y, and M are positive integers;

the computing device converts the M $x \times y$ random arrays into a first regulation signal set loaded to a spatial modulator in the optical computing topology structure, where the first regulation signal set includes M first regulation signals;

the computing device sequentially loads the M first regulation signals to the spatial modulator in the optical computing topology structure, so that the optical computing topology structure sequentially generates M first intermediate transmission matrices;

the computing device obtains the M first intermediate transmission matrices through sequential computing, and obtains first feedback values of M genetic algorithms of the M first intermediate transmission matrices through computing;

when a smallest value in the first feedback values does not meet a preset threshold, the computing device generates M first normalized feedback values based on the first feedback values, and generates a first array and a second array based on the M first normalized feedback values, where the first array is generated by sorting the M first normalized feedback values in ascending order, and the second array is obtained by computing an accumulated sum of the M first normalized feedback values in the first array;

the computing device obtains M groups of regulation signals through computing based on the first array and the second array, where each group of regulation signals includes two control signals;

the computing device sequentially selects each group of regulation signals in the M groups of regulation signals in a cross manner to generate a second regulation signal set, where the second regulation signal set includes M second regulation signals;

the computing device sequentially loads the M second regulation signals to the spatial modulator in the optical computing topology structure, so that the optical computing topology structure sequentially generates M second intermediate transmission matrices;

the computing device obtains the M second intermediate transmission matrices through sequential computing, and obtains second feedback values of M genetic algorithms of the M second intermediate transmission matrices through computing; and

when a smallest value in the second feedback values does not meet a second preset condition, a third feedback value that meets the second preset condition is obtained through sequential repeated computing, and a regulation signal corresponding to the third feedback value is used as the third regulation signal.

According to a fourth aspect, an embodiment of this application provides a computer-readable storage medium. The computer storage medium stores computer instructions, and the computer instructions are used to perform the method in any possible implementation of any one of the foregoing aspects.

According to a fifth aspect, an embodiment of this application provides a computer program product including instructions. When the computer program product runs on a computer, the computer is enabled to perform the method according to any one of the foregoing aspects.

According to a sixth aspect, this application provides a chip system. The chip system includes a processor, configured to support the computing device in implementing a function in the foregoing aspects, for example, generating or processing data and/or information in the foregoing method. In a possible design, the chip system further includes a memory. The memory is configured to store program instructions and data that are necessary for the computing device, to implement the function according to the third aspect. The chip system may include a chip, or may include a chip and another discrete component.

**BRIEF DESCRIPTION OF DRAWINGS**

FIG. 1 is a diagram of an embodiment of an optical computing topology structure according to an embodiment of this application;

FIG. 2 is a diagram of an embodiment of an optoelectronic computing system based on an optical computing topology structure according to an embodiment of this application;

FIG. 3 is a diagram of another embodiment of an optoelectronic computing system based on an optical computing topology structure according to an embodiment of this application;

FIG. 4 is a diagram of another embodiment of an optoelectronic computing system based on an optical computing topology structure according to an embodiment of this application;

FIG. 5 is a diagram of another embodiment of an optoelectronic computing system based on an optical computing topology structure according to an embodiment of this application;

FIG. 6 is a schematic flowchart of a regulation method for an optoelectronic computing system according to an embodiment of this application;

FIG. 7 is a schematic of a topology structure after completion of regulation of an optoelectronic computing system according to an embodiment of this application;

FIG. 8 is a diagram of a matrix that meets a small world distribution condition according to an embodiment of this application; and

FIG. 9 is a diagram of an embodiment of a computing device according to an embodiment of this application.

**DESCRIPTION OF EMBODIMENTS**

To make objectives, technical solutions, and advantages of this application clearer, the following describes embodiments of this application with reference to the accompanying drawings. It is clear that the described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances so that embodiments described herein can be implemented in other orders than the order illustrated or described herein. Moreover, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

Artificial intelligence technologies represented by deep neural networks have been successfully applied to fields such as autonomous driving, medical diagnosis, and natural language processing. Large-scale matrix-vector multiplication is a basic computing operation in a neural network training and inference process. As a scale of a neural network increases, for an electronic computing device based on a Von Neumann architecture, the operation needs to occupy a large amount of memory space, computing power consumption is high, and a computing speed is low. At present, researchers find that matrix vector multiplication in an artificial neural network can be performed at a high speed and low power consumption, and in high parallel by using an optical system. In recent years, an optoelectronic hybrid neural network has become a frontier research field of the artificial intelligence technologies. There is a long way to go before an existing optoelectronic hybrid neural network system is actually applied. A main reason is that complexity of an optical neural network model is low, and it is difficult to set a neural network model with a special topology structure for a specific task requirement. The optical neural network model is usually constructed by using a physical medium or a passive diffractive optical element. The physical medium and most passive diffractive optical elements have static topology structures, and it is difficult to optimize the topology structures of the physical medium and most passive diffractive optical elements for specific tasks. Although some diffractive optical elements including spatial light modulators can adjust parameters, adjustment space of the parameters is limited. Consequently, topology structure control cannot be implemented, and costs are high when a complex network structure is implemented.

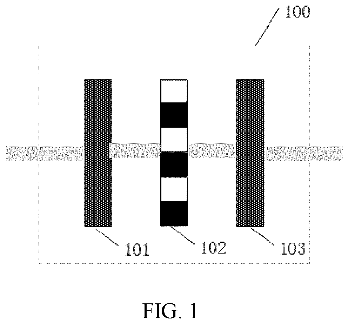

To resolve the foregoing problem, an embodiment of this application provides an optical computing topology structure. Specifically, as shown in FIG. 1, an optical computing topology structure 100 includes a first physical medium 101, a spatial light modulator 102, and a second physical medium 103. The first physical medium 101, the spatial light modulator 102, and the second physical medium 103 are sequentially connected. In an optical path propagation direction, the first physical medium 101 is configured to mix an input optical field, to implement a fully connected topology at positions in the input optical field to obtain a to-be-modulated optical field. The spatial light modulator 102 is configured to modulate an optical field parameter of the to-be-modulated optical field to obtain a to-be-output optical field. The second physical medium 103 is configured to mix the to-be-output optical field, to implement a fully connected topology of the to-be-output optical field to obtain an output optical field.

Optionally, for the optical computing topology structure described in FIG. 1, the first physical medium 101 is a scattering medium, a diffractive optical element, or a multi-mode optical fiber, and the second physical medium 103 is a scattering medium, a diffractive optical element, or a multi-mode optical fiber. It may be understood that, specific implementations of the first physical medium 101 and the second physical medium 103 are not limited herein, provided that the first physical medium 101 and the second physical medium 103 can implement optical field mixing and implement a function of the fully connected topology. In addition, the scattering medium may be a glass substrate coated with zinc oxide or titanium oxide.

Optionally, for the optical computing topology structure described in FIG. 1, the spatial light modulator 102 may be a liquid crystal SLM, a DMD, or a programmable diffractive surface, provided that optical field computing can be implemented. This is not specifically limited herein.

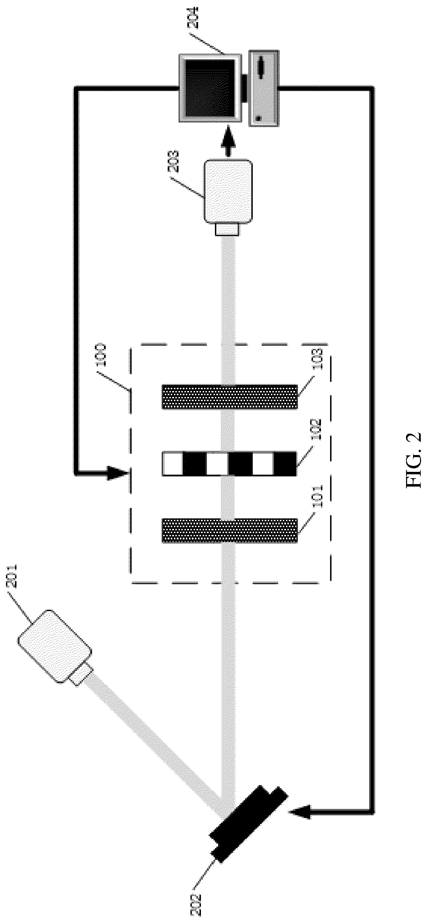

An optoelectronic computing system shown in FIG. 2 may be generated based on the optical computing topology structure in FIG. 1. The optoelectronic computing system includes a light source device 201, a spatial light modulator 202, the optical computing topology structure 100, a detector 203, and a computing device 204. The optical computing topology structure 100 has a function of the optical computing topology structure described in FIG. 1.

In an optical path transmission direction, the light source device 201, the spatial light modulator 202, the optical computing topology structure 100, the detector 203, and the computing device 204 are sequentially connected, and the computing device 204 is further connected to the spatial light modulator 202 and the optical computing topology structure 100.

The light source device 201 is configured to output a light source.

The spatial light modulator 202 is configured to: load an input signal, and convert the input signal from an electrical signal to an optical signal after being irradiated by the light source output by the light source device 201.

The optical computing topology structure 100 is configured to perform parameter modulation on the optical signal, to output a target optical field.

The detector 203 is configured to detect the target optical field output by the optical computing topology structure 100, to generate a picture.

The computing device 204 is configured to: control a modulation mode of the spatial light modulator 202 and a modulation mode of a spatial light modulator in the optical computing topology structure 100, and process the picture output by the detector.

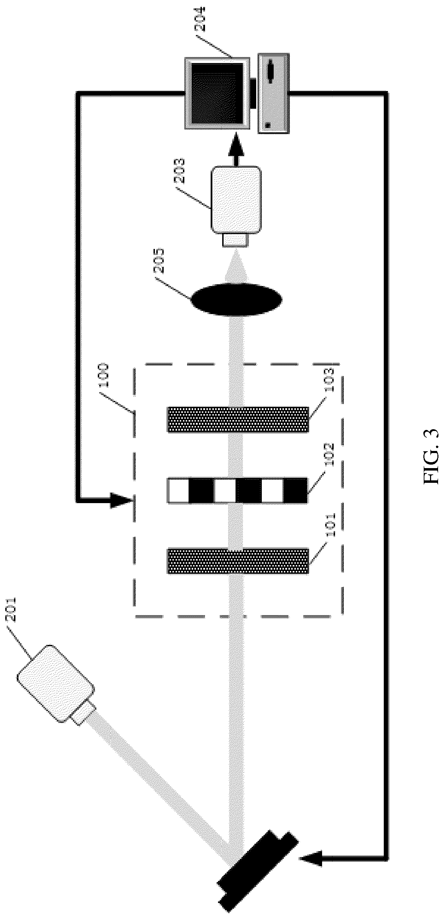

Optionally, as shown in FIG. 3, the optoelectronic computing system further includes a focus device 205. The focus device is located between the optical computing topology structure 100 and the detector 203. The focus device 205 is configured to: focus on the target optical field, and output a focused target optical field to the detector 203. The focus device 205 may be a lens or a lens group.

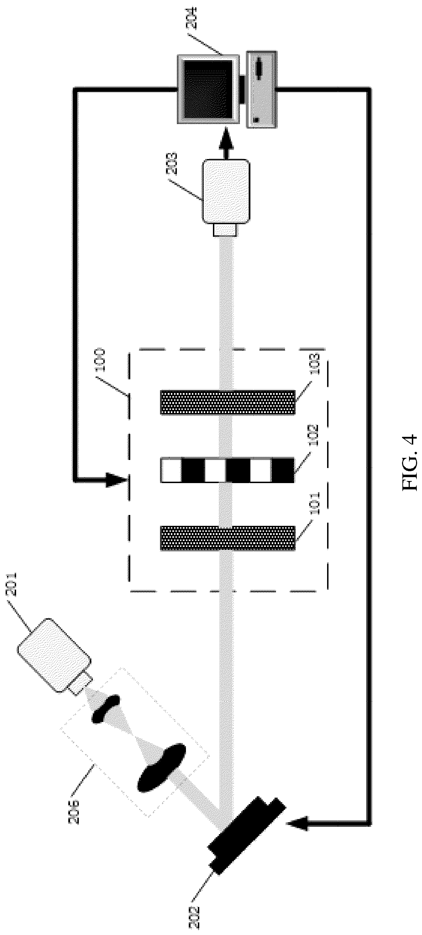

Optionally, as shown in FIG. 4, the optoelectronic computing system further includes a collimated beam expansion system 206. The collimated beam expansion system 206 is located between the light source device and the spatial light modulator. The collimated beam expansion system 206 is configured to perform beam expansion on the light source output by the light source device, to enable the light source to reach a target aperture. It may be understood that the collimated beam expansion system 206 may include a lens.

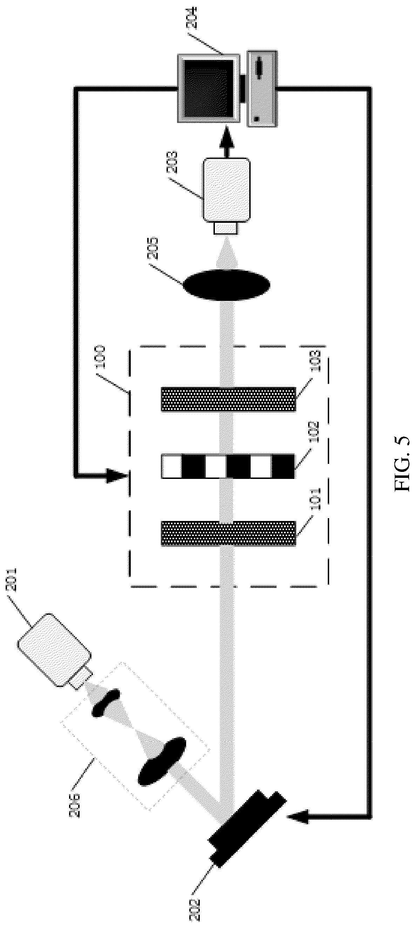

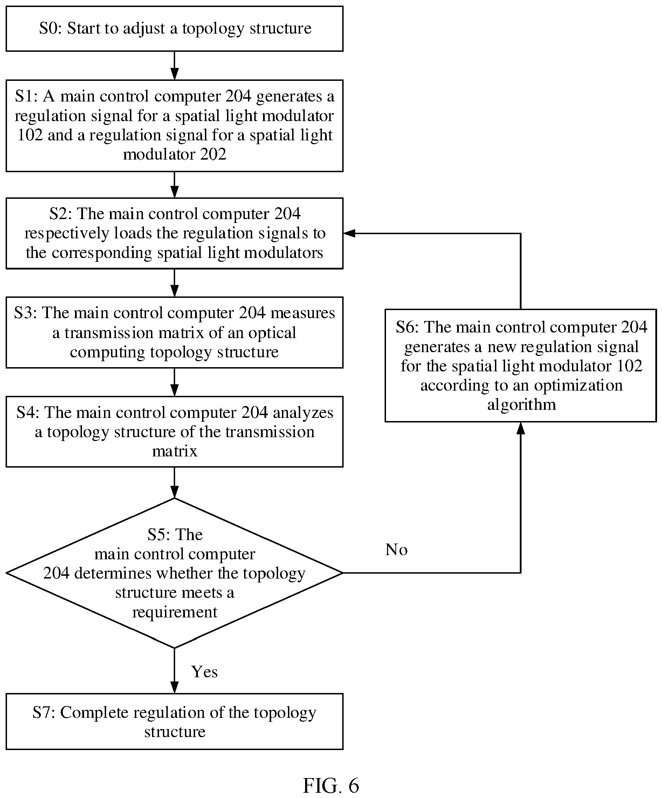

The foregoing specifically describes a structure of the optoelectronic computing system. The following describes, based on the optoelectronic computing system shown in FIG. 5, a regulation method for the optical computing topology structure in the optoelectronic computing system in this application. It may be understood that, in the optoelectronic computing system shown in FIG. 5, the light source device 201 is a coherent light source, the spatial light modulator 202 is a digital micromirror device, the optoelectronic computing system further includes the collimated beam expansion system 206 including the lens, the spatial light modulator 102 in the optical computing topology structure 100 is a liquid crystal SLM, the first physical medium 101 and the second physical medium 103 are glass substrates coated with zinc oxide, the focus device 205 is a focusing lens, the detector 203 is a CMOS camera, and the computing device 204 is a main control computer 204. The coherent light source outputs laser light with a wavelength of 532 nanometers (nm), and the laser light is converted into a light beam with an aperture of 15 millimeters (mm) after passing through the collimated beam expansion system. There are $30\times30$ effective regulation units in the digital micromirror device, and a refresh frequency is 23 kHz (kHz). There are $900\times900$ effective regulation units in the liquid crystal SLM. In the CMOS camera, there are $30\times30$ pixels that are effectively collected, and a collection frequency is 1 kHz. For the optoelectronic computing system, a schematic flowchart of the regulation method for the optoelectronic computing system in embodiments of this application may be shown in FIG. 6.

S0: Start to adjust the topology structure.

S1: The main control computer 204 generates a regulation signal for the spatial light modulator 102 and a regulation signal for the spatial light modulator 202.

S2: The main control computer 204 respectively loads the regulation signals to the corresponding spatial light modulators.

S3: The main control computer 204 measures a transmission matrix of the optical computing topology structure.

S4: The main control computer 204 analyzes a topology structure of the transmission matrix.

S5: The main control computer 204 determines whether the topology structure meets a requirement.

S6: The main control computer 204 generates a new regulation signal for the spatial light modulator 102 according to an optimization algorithm, and repeats S2 to S5 until a regulation signal loaded on the spatial light modulator 102 makes the generated transmission matrix meet a preset condition.

S7: Complete regulation of the topology structure.

Each of the steps is detailed below.

Step S0: When the optoelectronic computing system is applied to a new computing scenario, the optoelectronic computing system needs to obtain a topology structure corresponding to the computing scenario. In this way, accuracy of a computing result can be improved. Therefore, before the optoelectronic computing system runs, a topology structure adjustment function needs to be enabled.

Step S1: After the topology structure adjustment function is enabled, the main control computer 204 may provide an initial regulation signal (namely, a first regulation signal in this application) for the optical computing topology structure and an initial regulation signal (namely, a second regulation signal in this application) for the spatial light modulator 202 in the optoelectronic computing system. In an example solution, the first regulation signal may be set as $S_0$. The second regulation signal may be set as 4000 groups of control signals that are randomly generated. Each group of regulation signals are binary control signals of a size of $30\times30$, and are denoted as $x_1$, $x_2$, ..., and $x_{4000}$, and each control signal includes only 0 and 255. That is, each control signal in $x_1$, $x_2$, ..., and $x_{4000}$ is a group of matrix signals including 0 and 255. It may be understood that, in addition to 0 and 255, elements in the control signal may be other elements, for example, 0 and 255, or 10 and 255, provided that the elements are two different elements.

Step S2: The main control computer 204 loads the first regulation signal to the spatial light modulator in the optical computing topology structure, so that the optical computing topology structure can generate an initial transmission matrix (namely, a first transmission matrix in this application).

Step S3: In a possible implementation, a method for measuring the transmission matrix of the optical computing topology structure by the computing device may be as follows:

The computing device sequentially loads signals in the second regulation signal to the spatial light modulator, to obtain a plurality of output optical fields; and the computing device obtains an amplitude set of the plurality of output optical fields that are sequentially output by the detector.

The computing device integrates the second regulation signal into an $m\times n$ first matrix, and integrates the amplitude set into an $m\times n$ second matrix, where m and n are positive integers; and obtains the first transmission matrix through computing based on the first matrix and the second matrix.

In an example solution, the specific procedure may be as follows:

Step 1: The main control computer 204 loads the second regulation signal generated in S1 to a DMD in the optoelectronic computing system (which may also be understood as transmitting the second regulation signal to a memory of the DMD).

Step 2: The main control computer 204 controls the DMD to load the first control signal in the 4000 groups of control signals, and then regulates collimated laser light output by the collimated beam expansion system; a regulated optical field is re-modulated by the optical computing topology structure, and a modulated optical field is output; and the modulated optical field is output to the CMOS camera after being aggregated by the focusing lens, and the CMOS camera obtains optical field strength $I_1$ of the modulated optical field, and outputs the modulated optical field to the main control computer 204.

Step 3: The main control computer 204 obtains amplitude distribution $y_1$ of the optical field based on the optical field strength, where $y_1 = \sqrt{I_1}$ .

Step 4: Repeat step 2 to step 3 until the CMOS camera completes collection of optical field amplitude distribution corresponding to the 4000 groups of control signals, where specific values of the optical field amplitude distribution are $y_1$, $y_2$, ..., and $y_{4000}$.

Step 5: Integrate 4000 control signals of the DMD into a 900×4000 matrix X, where $X = [x_1, x_2, ..., x_{4000}]$; integrate amplitude distribution that is of 4000 optical fields and that is collected by the CMOS camera into a 900×4000 matrix Y, where $Y = [y_1, y_2, ..., y_{4000}]$; and assume that the first transmission matrix of the optical computing topology structure is D, then X, Y, and D satisfy $Y^H = \left| X^H D^H \right|$ , where H represents conjugate transposition.

Step 6: Infer a value $d_1$ of the first row of the first transmission matrix based on a no-reference transmission matrix measurement method of variational Bayesian inference, where $d_1$ satisfies a formula $y_1 = e^{j\theta_2}\left(\sum_{i=1}^{900} x_{1i} d_{1i}^* + \omega_1\right)$ , where * represents a conjugate, $\omega_1$ represents noise, $\omega_1$ satisfies Gaussian distribution of $(0, \sigma_n)$, $\theta_1 \in [0, 2\pi)$ represents a lost conjugate phase of the first row, and $d_{1i}^*$ represents a conjugate of the $i_{th}$ element of the first row.

Step 7: Set initial parameters of the no-reference transmission matrix measurement method of variational Bayesian inference, including a variance $\sigma_d^2$ of values in the first row of the first transmission matrix, a variance $\sigma_n^2$ of the noise, and an initial value $d_1^0$ of the first row of the first transmission matrix; and set $\sigma_d^2$ to a maximum square value of $X^{-1}y_1$, set $\sigma_n^2$ to $10^{-8}$, and if missing phase distribution of a randomly generated transmission matrix is $\theta_1^0$, set $d_1^0$ to $X^{-1}y_1 e^{j\theta_1^0}$ .

Step 8: Compute values of $m_{1i}$ and $\Sigma_{1i}$ by using formulas $m_{1i} = \frac{\sigma_d^2}{\sigma_n^2 + \sigma_d^2 x_{1i}^H x_{1i}} r_i^H x_{1i}$ and $\Sigma_{1i} = \frac{\sigma_n^2 \sigma_d^2}{\sigma_n^2 + \sigma^2 x_{1i}^H x_{1i}}$ , $r_i = \bar{y} - \sum_{k \neq i} m_{1k}^* x_{1k}$ , $\bar{y} = y_1 e^{j \arg(y_1^* z)} \frac{I_1(\frac{2}{\sigma_n^2}|y_1^* z|)}{I_0(\frac{2}{\sigma_n^2}|y_1^* z|)}$ , $z = \sum_{i=1}^{900} m_{1i}^* x_{1i}$ , where $0 \leq i < 900$, arg represents an amplitude angle, * represents a conjugate, and $I_0$ and $I_1$ respectively represent a zero-order function and a first-order function of a first-type modified Bessel function.

Step 9: Update the value $\sigma_n^2$, where $\sigma_n^2$ satisfies the following formula: $\sigma_n^2 = \frac{1}{4000}\left(y_1^H y_1 - 2\Re\left(\bar{y}^H \sum_{i=1}^{900} m_{1i} x_{1i}\right) + \sum_{i=1}^{900} \Sigma_{1i} x_{1i}^H x_{1i} + \sum_{i=1}^{900}\sum_{k=1}^{900} m_i^* m_k x_{1i}^H x_{1k}\right)$ , where $\Re$ represents obtaining a real part.

Step 10: Repeat step 7 to step 8 until a quantity of cycles reaches 400. In this case, the first row $d_1$ of the first transmission matrix is obtained, where $d_{1i} = m_{1i}$.

Step 11: Repeat step 6 to step 10 to infer parameters of all rows of the first transmission matrix. In this case, computing of the first transmission matrix of the optical computing topology structure is completed.

S4: The main control computer 204 analyzes the topology structure of the first transmission matrix. In this embodiment, the main control computer 204 determines, according to a first formula, whether the first transmission matrix meets a first preset condition.

The first formula is T=G·A, · represents element-wise multiplication, G represents a dense complex Gaussian random matrix, A represents a connection relationship between each element and another element in G, and T represents the first transmission matrix. The first preset condition is that A meets small world distribution.

S5: The main control computer 204 determines, according to the first formula, whether the topology structure meets the requirement, that is, determines whether a topology connection of the matrix A meets the small world distribution; and performs S6 if the topology structure does not meet the requirement, or performs S7 if the topology structure meets the requirement.

S6: The main control computer 204 generates a new control signal according to the optimization algorithm. In an example solution, a method for generating, by the main control computer 204, the new control signal according to the optimization algorithm may be as follows: The computing device randomly generates M x×y random arrays, where x, y, and M are positive integers. The computing device converts the M x×y random arrays into a first regulation signal set loaded to a spatial modulator in the optical computing topology structure, where the first regulation signal set includes M first regulation signals. The computing device sequentially loads the M first regulation signals to the spatial modulator in the optical computing topology structure, so that the optical computing topology structure sequentially generates M first intermediate transmission matrices. The computing device obtains the M first intermediate transmission matrices through sequential computing, and obtains first feedback values of M genetic algorithms of the M first intermediate transmission matrices through computing. When a smallest value in the first feedback values does not meet a preset threshold, the computing device generates M first normalized feedback values based on the first feedback values, and generates a first array and a second array based on the M first normalized feedback values, where the first array is generated by sorting the M first normalized feedback values in ascending order, and the second array is obtained by computing an accumulated sum of the M first normalized feedback values in the first array. The computing device obtains M groups of regulation signals through computing based on the first array and the second array, where each group of regulation signals includes two control signals. The computing device sequentially selects each group of regulation signals in the M groups of regulation signals in a cross manner to generate a second regulation signal set, where the second regulation signal set includes M second regulation signals. The computing device sequentially loads the M second regulation signals to the spatial modulator in the optical computing topology structure, so that the optical computing topology structure sequentially generates M second intermediate transmission matrices. The computing device obtains the M second intermediate transmission matrices through sequential computing, and obtains second feedback values of M genetic algorithms of the M second intermediate transmission matrices through computing. When a smallest value in the second feedback values does not meet a second preset condition, a third feedback value that meets the second preset condition is obtained through sequential repeated computing, and a regulation signal corresponding to the third feedback value is used as the third regulation signal.

A specific application scenario of the foregoing method may be as follows:

Step 1: The main control computer 204 randomly generates M random arrays whose sizes are 900×900, and converts the M random arrays into control signals for the spatial light modulator 102, where the M control signals are respectively represented as $S_{11}$, $S_{12}$, ..., and $S_{1M}$, and each element in the control signal is an integer belonging to [0,1,···,255].

Step 2: The main control computer 204 inputs the control signal $S_{11}$ to the spatial light modulator 102, and controls the spatial light modulator 102 to load the control signal $S_{11}$, to change the topology structure of the optical computing topology structure 100.

Step 3: After being modulated by the DMD 202, the collimated laser light passing through the collimated beam expansion system is scattered by using the optical computing topology structure 100, and then a scattered light is converged on the CMOS camera by using the focusing lens 205.

Step 4: Measure the transmission matrix of the optical computing topology structure 100 based on the transmission matrix measurement method described in S3, and obtain the transmission matrix $TM_{11}$ of the optical computing topology structure 100; and if a location of a zero element in $A_0$ in the matrix is $p_{i,j}$ ($1 \leq i \leq 900$, and $1 \leq j \leq 900$), calculate a sum of absolute values of elements at the location $p_{i,j}$ in the transmission matrix $TM_{11}$, use the sum as a feedback value of the genetic algorithm, and denote the sum as $\Delta_{11}$. That is, $A_0$ is a randomly generated matrix, and quantities of rows and columns of the matrix $A_0$ are the same as quantities of rows and columns of $TM_{11}$. If $A_0 = \begin{bmatrix} 1 & 0 \\ 0 & 0 \end{bmatrix}$ and

$TM_{11} = \begin{bmatrix} a & b \\ c & d \end{bmatrix}$, $\Delta_{11} = |p_{1,2}| + |p_{2,1}| + |p_{2,2}| = |b| + |c| + |d|$.

Step 5: Repeat step 2 to step 4, to obtain all M feedback values, which are respectively $\Delta_{11}$, $\Delta_{12}$, ..., and $\Delta_{1M}$.

Step 6: Divide each value in $\Delta_{11}$, $\Delta_{12}$, ..., and $\Delta_{1M}$ by a sum of M values $\Delta$, to obtain M normalized values $\Delta'_{11}$, $\Delta'_{12}$, ..., and $\Delta'_{1M}$, arrange the normalized values in ascending order, and denote the normalized values as an array C; and calculate an accumulated sum of the M normalized values, and denote the accumulated sum as an array D, so that the $i^{th}$ value in the array D is a sum of first i values in the array C. For example, if the array C is (0.1, 0.2, 0.3, 0.4), the array D is (0.1, 0.3, 0.6, 1).

Step 7: Randomly generate a real number from 0 to 1, and if the real number is greater than the $i^{th}$ number in the array D and is less than or equal to the $(i+1)^{th}$ number in the array D, select a control signal that is of the spatial light modulator 102 and that corresponds to the $(i+1)^{th}$ normalized value in the array C, for example, $S_{1k}$; randomly generate a real number from 0 to 1 again, and if the real number is greater than the $j^{th}$ number in the array D and is less than or equal to the $(j+1)^{th}$ number in the array D, select a control signal that is of the spatial light modulator 102 and that corresponds to the $(j+1)^{th}$ normalized value in the array C, for example, $S_{1t}$; and use $S_{1k}$ and $S_{1t}$ as a pair of parents in the genetic algorithm. For example, if the real number generated for the first time is 0.2, a control signal corresponding to the spatial light modulator 102 corresponding to 0.2 in the array C is selected. If the real number generated for the second time is 0.5, a control signal corresponding to the spatial light modulator 102 corresponding to 0.3 in the array C is selected.

Step 8: Randomly generate a matrix B whose dimension is $900 \times 900$, where the matrix B includes only elements 0 and 1.

Step 9: Perform cross selection on $S_{1k}$ and $S_{1t}$, to form a new regulation signal $S_{21}$. It is assumed that an element at a location (i, j) in the regulation signal $S_{21}$ is $s_{i,j}$. If an element at the location (i, j) in the matrix B is equal to 1, a value of $s_{i,j}$ is equal to a value of an element at the location (i, j) in $S_{1k}$. If an element at the location (i, j) in the matrix B is equal to 0, a value of $s_{i,j}$ is equal to a value of an element at the location (i, j) in $S_{1t}$.

Step 10: Randomly generate a real value between 0 and 1; and if the value is less than a jump parameter 0.1, replace the value of $s_{i,j}$ generated in step 9 with any value in a range [0, 1, ..., 255].

Step 11: Repeat step 9 to step 10 until a complete regulation signal $S_{21}$ is generated.

Step 12: Repeat step 7 to step 11 until M regulation signals are generated, which are respectively $S_{21}, S_{22}, ...,$ and $S_{2M}$.

Step 13: Repeat step 2 to step 12 until a smallest value in the M values $\Delta$ is less than a specified threshold $10^{-1}$. In this case, optimization ends, and a control signal corresponding to the smallest value in the M values $\Delta$ is used as the third regulation signal.

Step 14: Input the third regulation signal to the spatial light modulator 102, then repeat S3 to S5, and perform S7 if the topology structure corresponding to the transmission matrix generated by the optical computing topology structure in S5 meets the first preset condition.

S7: Complete regulation of the topology structure.

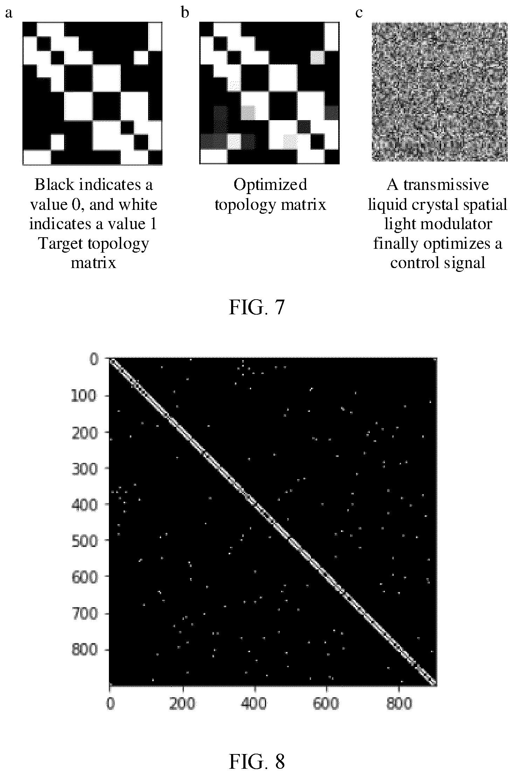

After the regulation of the topology structure ends, a regulation result may be shown in FIG. 7. It can be learned by comparing a in FIG. 7 with b in FIG. 7 that, when a control signal shown in c in FIG. 7 is loaded on the spatial light modulator 102, topology regulation of the optical computing topology structure can be implemented based on the method provided in this application.

The following describes an application scenario of the optoelectronic computing system in embodiments of this application. It is assumed that the optoelectronic computing system after completion of regulation is applied to prediction of time series data MackeyGlass-17 data. It is assumed that input data (training set data or to-be-predicted data) at a moment t is I(t), and a dimension of the input data is P. Elements in I(t) are represented as $I_{t1}, I_{t2}, ...,$ and $I_{tp}$. Input data at all moments is [I(1), I(2), ..., I(N)]. In this embodiment, P=1. A process of performing optoelectronic computing by using the system shown in FIG. 5 is as follows:

Step 1: Configure the topology structure of the optical computing topology structure based on the method for adjusting the topology structure of the optical computing topology structure, so that the transmission matrix of the topology structure is T. $T = G \cdot A$, where $\cdot$ represents element-wise multiplication, G represents a dense complex Gaussian random matrix, A represents a connection relationship between each element and another element in G, and an element value of A is 0 or 1. In this embodiment, a topological connection of the matrix A conforms to small world distribution. A diagram of strength distribution of the matrix A that meets a small world network connection may be shown in FIG. 8, where black indicates that a value is 1, and white indicates that a value is 1.

Step 2: The main control computer 204 performs normalization processing on I(t) based on the input I(t) according to a formula (1) to obtain k(t).

Step 3: The main control computer 204 converts k(m) into binarization information according to a formula (2).

$$c_i = \frac{2i-1}{2n_{bin}}, s = \frac{2\lfloor n_{bin}/2 \rfloor - 1}{4n_{bin}}, \; n_{bin}$$

Herein, $n_{bin}$ represents a quantity of DMD pixel points used to encode a single element in k(t), i represents the $i^{th}$ DMD pixel point used to encode a single element in k(t), a value of 1 indicates that the DMD pixel point is enabled, and a value of 0 indicates that the DMD pixel point is disabled. $\lfloor \rfloor$ represents rounding down.

Step 4: The main control computer 204 inputs the binarization information to the DMD 202, and controls the DMD 202 to load a corresponding mode.

Step 5: The modulated optical field is scattered by the configured optical computing topology structure 100, and then is focused on the CMOS camera 203 by the focusing lens 205.

Step 6: The main control computer 204 controls the CMOS camera 203 to obtain a strength picture, which is denoted as x(m).

Step 7: Use input i(m+1) at a next moment and x(m) obtained in step 6 as inputs, and convert, according to the formula (2), the inputs into binarization information for controlling DMD mode loading; and perform step 4 to step 6 to obtain a strength picture, which is denoted as x(m+1).

Step 8: Repeat step 7 to obtain x(m), x(m+1), ..., and x(m+N) corresponding to i(m), i(m+1), ..., and i(m+N).

Step 9: The computer selects i(m+M+1), i(m+M+2), ..., and i(m+N) to form a target matrix T(M>=0), selects x(m+M+1), x(m+M+2), ..., and x(m+N) to form a matrix $M_x$, and obtains a matrix W through computing according to a formula $W=(T \cdot M_x^T)(M_x \cdot M_x^T + \lambda \cdot I)$ (where I is a unit matrix, and $\lambda$ represents a regularization coefficient).

Step 10: Use i(m+N+1) and x(m+N) as inputs, and convert, according to the formula (2), the inputs into binarization information for controlling DMD mode loading; perform step 5 to step 7 to obtain a strength picture, which is denoted as x(m+N+1); and in the computer, multiply the matrix W by x(m+N+1), to obtain y(m+N+1).

Step 11: The main control computer 18 uses y(m+N+1) and x(m+N+1) as inputs, and converts, according to the formula (2), the inputs into binarization information for controlling DMD mode loading; perform step 4 to step 6, to obtain a strength picture, which is denoted as x(m+N+2); and in the main control computer 18, multiply the matrix W by x(m+N+2), to obtain y(m+N+2).

Step 12: Repeat step 11 to obtain y(m+N+3), y(m+N+4), ..., and y(m+N+Q) (where Q is a positive integer).

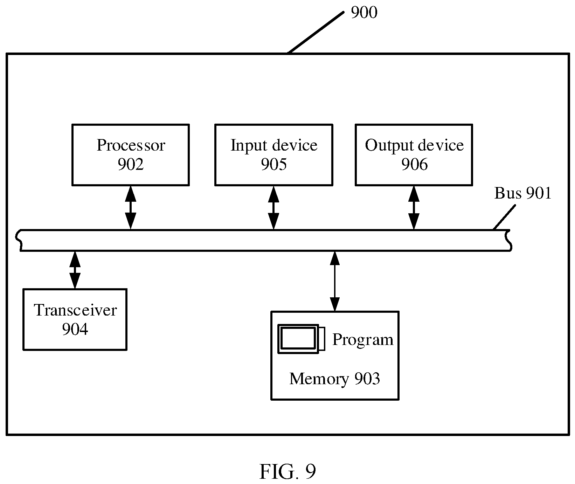

For details, refer to FIG. 9. FIG. 9 is a diagram of a possible structure of a computing device 900 according to the foregoing embodiments. The computing device 900 may be configured as the main control computer. The computing device 900 may include a processor 902, a computer-readable storage medium/memory 903, a transceiver 904, an input device 905, an output device 906, and a bus 901. The processor, the transceiver, the computer-readable storage medium, and the like are connected through the bus. A specific medium for connecting the foregoing parts is not limited in this embodiment of this application.

In an example, the processor 902 generates a first regulation signal and a second regulation signal.

The transceiver 904 loads the first regulation signal to the optical computing topology structure, so that the optical computing topology structure generates a first transmission matrix; and loads the second regulation signal to the spatial light modulator.

The processor 902 obtains the first transmission matrix through measurement; and determines whether the first transmission matrix meets a first preset condition, and if the first transmission matrix does not meet the first preset condition, generates a third regulation signal according to an optimization algorithm.

The transceiver 904 loads the third regulation signal to the optical computing topology structure, so that the optical computing topology structure generates a second transmission matrix; and loads the second regulation signal to the spatial light modulator, to obtain the second transmission matrix.

When the second transmission matrix does not meet the first preset condition, the processor 902 obtains, through sequential repeated computing, a fourth regulation signal that meets the preset condition, where the fourth regulation signal is a regulation signal loaded to the optical computing topology structure. The computing device determines that the fourth regulation signal is a loaded signal of the optical computing topology structure, and that the second regulation signal is a loaded signal of the spatial light modulator.

The transceiver 904 and the processor 902 may implement corresponding steps in any embodiment in FIG. 6. Details are not described herein again.

It may be understood that FIG. 9 shows only a simplified design of the computing device. In actual application, the computing device may include any quantities of transceivers, processors, memories, and the like, and all computing devices that can implement this application fall within the protection scope of this application.

The processor 902 in the apparatus 900 may be a general-purpose processor, for example, a CPU, a network processor (network processor, NP), or a microprocessor, or may be an ASIC, or one or more integrated circuits configured to control program execution of the solutions of this application. Alternatively, the processor 902 may be a digital signal processor (digital signal processor, DSP), a field-programmable gate array (field-programmable gate array, FPGA), another programmable logic device, a discrete gate, a transistor logic device, or a discrete hardware component. Alternatively, the controller/processor may be a combination of processors implementing a computing function, for example, a combination of one or more microprocessors, or a combination of the DSP and a microprocessor. The processor usually performs a logical and arithmetic operation based on program instructions stored in the memory.

The bus 901 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 9, but this does not mean that there is only one bus or only one type of bus.

The computer-readable storage medium/memory 903 may further store an operating system and another application. Specifically, the program may include program code, and the program code includes computer operation instructions. More specifically, the foregoing memory may be a ROM, a static storage device of another type that may store static information and instructions, a RAM, a dynamic storage device of another type that may store information and instructions, a magnetic disk memory, or the like. The memory 903 may be a combination of the foregoing memories. In addition, the computer-readable storage medium/memory may be located in the processor, or may be located outside the processor, or may be distributed on a plurality of entities including a processor and a processing circuit. The computer-readable storage medium/memory may be specifically embodied in a computer program product. For example, the computer program product may include a computer-readable medium included in an encapsulation material.

Alternatively, an embodiment of this application further provides a universal processing system. For example, the universal processing system is usually referred to as a chip. The universal processing system includes one or more microprocessors that provide a processor function, and an external memory that provides at least a part of a storage medium. All these components are connected to another supporting circuit by using an external bus architecture. When instructions stored in the memory are executed by the processor, the processor is enabled to perform some or all of the steps of the computing device in the regulation method in the embodiment in FIG. 6, and/or another process used for a technology described in this application.

Method or algorithm steps described in combination with the content disclosed in this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a terminal. Certainly, the processor and the storage medium may alternatively exist in the computing device as discrete components.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, all functional units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1.   An optical computing topology structure, comprising:

a first physical medium, a spatial light modulator, and a second physical medium, wherein
the first physical medium, the spatial light modulator, and the second physical medium are sequentially connected;

the first physical medium is configured to mix an input optical field, to implement a fully connected topology of the input optical field to obtain a to-be-modulated optical field;

the spatial light modulator is configured to modulate an optical field parameter of the to-be-modulated optical field to obtain a to-be-output optical field; and

the second physical medium is configured to mix the to-be-output optical field, to implement a fully connected topology of the to-be-output optical field to obtain an output optical field.

2. The optical computing topology structure according to claim 1, wherein the first physical medium is a scattering medium, a diffractive optical element, or a multi-mode optical fiber; and

the second physical medium is a scattering medium, a diffractive optical element, or a multi-mode optical fiber.

3. The optical computing topology structure according to claim 2, wherein the scattering medium is a glass substrate coated with zinc oxide or titanium oxide.

4. The optical computing topology structure according to any one of claims 1 to 3, wherein the spatial light modulator is a liquid crystal spatial light modulator, a digital micromirror device, or a programmable diffractive surface.

5. An optoelectronic computing system based on an optical computing topology structure, wherein the optoelectronic computing system comprises:

a light source device, a spatial light modulator, an optical computing topology structure, a detector, and a computing device, wherein the optical computing topology structure has the function according to any one of claims 1 to 4;

the light source device, the spatial light modulator, the optical computing topology structure, the detector, and the computing device are sequentially connected, and the computing device is further connected to the spatial light modulator and the optical computing topology structure;

the light source device is configured to output a light source;

the spatial light modulator is configured to load an input signal on the light source, so that the input signal is converted from an electrical signal into an optical signal;

the optical computing topology structure is configured to perform parameter modulation on the optical signal, to output a target optical field;

the detector is configured to detect the target optical field output by the optical computing topology structure, to generate a picture; and

the computing device is configured to: control a modulation mode of the spatial light modulator and a modulation mode of a spatial light modulator in the optical computing topology structure, and process the picture output by the detector.

6. The system according to claim 5, wherein the optoelectronic computing system further comprises a focus device, the focus device is located between the optical computing topology structure and the detector, and the focus device is configured to: focus on the target optical field, and output a focused target optical field to the detector.

7. The system according to claim 6, wherein the focus device is a lens or a lens group.

8. The system according to any one of claims 5 to 7, wherein the optoelectronic computing system further comprises a collimated beam expansion system, the collimated beam expansion system is located between the light source device and the spatial light modulator, and the collimated beam expansion system is configured to perform beam expansion on the light source output by the light source device, to enable the light source to reach a target aperture.

9. The system according to any one of claims 5 to 8, wherein the spatial light modulator is a liquid crystal spatial light modulator, a digital micromirror device, or a programmable diffractive surface.

10. The system according to any one of claims 5 to 8, wherein the detector is a planar array complementary oxide semiconductor camera or a planar array charge-coupled device camera.

11. A regulation method for an optoelectronic computing system, wherein the regulation method is applied to the optoelectronic computing system according to any one of claims 5 to 10, and comprises:

generating, by the computing device, a first regulation signal and a second regulation signal;

loading, by the computing device, the first regulation signal to the optical computing topology structure, so that the optical computing topology structure generates a first transmission matrix;

loading, by the computing device, the second regulation signal to the spatial light modulator, to obtain the first transmission matrix through measurement;

determining, by the computing device, whether the first transmission matrix meets a first preset condition, and if the first transmission matrix does not meet the first preset condition, generating a third regulation signal according to an optimization algorithm;

loading, by the computing device, the third regulation signal to the optical computing topology structure, so that the optical computing topology structure generates a second transmission matrix;

loading, by the computing device, the second regulation signal to the spatial light modulator, to obtain the second transmission matrix through measurement;

when the second transmission matrix does not meet the first preset condition, obtaining, through sequential repeated computing, a fourth regulation signal that meets the preset condition, wherein the fourth regulation signal is a regulation signal loaded to the optical computing topology structure; and

determining, by the computing device, that the fourth regulation signal is a loaded signal of the optical computing topology structure, and that the second regulation signal is a loaded signal of the spatial light modulator.

12. The method according to claim 11, wherein the loading, by the computing device, the second regulation signal to the spatial light modulator, to obtain the first transmission matrix through measurement comprises:

sequentially loading, by the computing device, signals in the second regulation signal to the spatial light modulator, to obtain a plurality of output optical fields;

obtaining, by the computing device, an amplitude set of the plurality of output optical fields that are sequentially output by the detector;

integrating, by the computing device, the second regulation signal into an m×n first matrix, and integrating the amplitude set into an m×n second matrix, wherein m and n are positive integers; and

obtaining the first transmission matrix through computing based on the first matrix and the second matrix.

13. The method according to claim 11 or 12, wherein the determining, by the computing device, whether the first transmission matrix meets a first preset condition comprises:

determining, by the computing device according to a first formula, whether the first transmission matrix meets the first preset condition, wherein

the first formula is $T = G \cdot A$, $\cdot$ represents element-wise multiplication, G represents a dense complex Gaussian random matrix, A represents a connection relationship between each element and another element in G, and T represents the first transmission matrix; and

the first preset condition is that A meets small-world distribution.

14. The method according to any one of claims 11 to 13, wherein the generating a third regulation signal according to an optimization algorithm comprises:

randomly generating, by the computing device, M x×y random arrays, wherein x, y, and M are positive integers;

converting, by the computing device, the M x×y random arrays into a first regulation signal set loaded to a spatial modulator in the optical computing topology structure, wherein the first regulation signal set comprises M first regulation signals;

sequentially loading, by the computing device, the M first regulation signals to the spatial modulator in the optical computing topology structure, so that the optical computing topology structure sequentially generates M first intermediate transmission matrices;

obtaining, by the computing device, the M first intermediate transmission matrices through sequential computing, and obtaining first feedback values of M genetic algorithms of the M first intermediate transmission matrices through computing;

when a smallest value in the first feedback values does not meet a preset threshold, generating, by the computing device, M first normalized feedback values based on the first feedback values, and generating a first array and a second array based on the M first normalized feedback values, wherein the first array is generated by sorting the M first normalized feedback values in ascending order, and the second array is obtained by computing an accumulated sum of the M first normalized feedback values in the first array;

obtaining, by the computing device, M groups of regulation signals through computing based on the first array and the second array, wherein each group of regulation signals comprises two control signals;

sequentially selecting, by the computing device, each group of regulation signals in the M groups of regulation signals in a cross manner to generate a second regulation signal set, wherein the second regulation signal set comprises M second regulation signals;

sequentially loading, by the computing device, the M second regulation signals to the spatial modulator in the optical computing topology structure, so that the optical computing topology structure sequentially generates M second intermediate transmission matrices;

obtaining, by the computing device, the M second intermediate transmission matrices through sequential computing, and obtaining second feedback values of M genetic algorithms of the M second intermediate transmission matrices through computing; and

when a smallest value in the second feedback values does not meet a second preset condition, obtaining, through sequential repeated computing, a third feedback value that meets the second preset condition, and using a regulation signal corresponding to the third feedback value as the third regulation signal.

15. A computer device, comprising a memory, a processor, and a bus system, wherein

the memory is configured to store a program;
the processor is configured to execute the program in the memory, and the processor is configured to perform the method according to any one of claims 11 to 14 based on instructions in program code; and
the bus system is configured to connect the memory and the processor, to enable the memory and the processor to communicate with each other.

16. A computer-readable storage medium, comprising instructions, wherein when the instructions are run on a computer, the computer is enabled to perform the method according to any one of claims 11 to 14.

FIG. 1

FIG. 2

FIG. 3

FIG. 4

FIG. 5

S0: Start to adjust a topology structure

↓

S1: A main control computer 204 generates a regulation signal for a spatial light modulator 102 and a regulation signal for a spatial light modulator 202

↓

S2: The main control computer 204 respectively loads the regulation signals to the corresponding spatial light modulators

↓

S3: The main control computer 204 measures a transmission matrix of an optical computing topology structure

↓

S4: The main control computer 204 analyzes a topology structure of the transmission matrix

↓

S5: The main control computer 204 determines whether the topology structure meets a requirement

No →

S6: The main control computer 204 generates a new regulation signal for the spatial light modulator 102 according to an optimization algorithm

Yes ↓

S7: Complete regulation of the topology structure

FIG. 6

a                   b                   c

Black indicates a
value 0, and white
indicates a value 1
Target topology
matrix

Optimized
topology matrix

A transmissive
liquid crystal spatial
light modulator
finally optimizes a
control signal

FIG. 7

FIG. 8

FIG. 9

## INTERNATIONAL SEARCH REPORT

| International application No. |
| --- |
| **PCT/CN2023/074020** |

**A. CLASSIFICATION OF SUBJECT MATTER**

G06N3/067(2006.01)i

According to International Patent Classification (IPC) or to both national classification and IPC

**B. FIELDS SEARCHED**

Minimum documentation searched (classification system followed by classification symbols)

IPC:G06K9/-,G06N3/-

Documentation searched other than minimum documentation to the extent that such documents are included in the fields searched

Electronic data base consulted during the international search (name of data base and, where practicable, search terms used)

CJFD, CNTXT, ENTXTC, DWPI, VEN, CNKI: 调制, 混合, 介质, 输入光场, 拓扑, Modul+, mix+, topology, light field

**C. DOCUMENTS CONSIDERED TO BE RELEVANT**

| Category* | Citation of document, with indication, where appropriate, of the relevant passages | Relevant to claim No. |
| --- | --- | --- |
| Y | CN 106950195 A (XIDIAN UNIVERSITY) 14 July 2017 (2017-07-14) description, paragraphs 43-112 | 1-10 |
| Y | CN 112041857 A (BAR-ILAN UNIVERSITY) 04 December 2020 (2020-12-04) description, paragraphs 72-90 | 1-10 |
| A | US 2021201126 A1 (LIGHTELLIGENCE INC.) 01 July 2021 (2021-07-01) entire document | 1-16 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **22 February 2023** | **07 March 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT
### Information on patent family members

| International application No. |
| --- |
| **PCT/CN2023/074020** |

| Patent document cited in search report | | | Publication date (day/month/year) | Patent family member(s) | | | Publication date (day/month/year) |
| --- | --- | --- | --- | --- | --- | --- | --- |
| CN | 106950195 | A | 14 July 2017 | CN | 106950195 | B | 07 May 2019 |
| CN | 112041857 | A | 04 December 2020 | EP | 3776373 | A1 | 17 February 2021 |
| | | | | EP | 3776373 | A4 | 05 January 2022 |
| | | | | WO | 2019186548 | A1 | 03 October 2019 |
| | | | | JP | 2021524952 | A | 16 September 2021 |
| | | | | US | 2021027154 | A1 | 28 January 2021 |
| US | 2021201126 | A1 | 01 July 2021 | CN | 113496281 | A | 12 October 2021 |
| | | | | TW | 202147060 | A | 16 December 2021 |
| | | | | US | 2020110992 | A1 | 09 April 2020 |
| | | | | US | 11507818 | B2 | 22 November 2022 |
| | | | | WO | 2020149953 | A1 | 23 July 2020 |
| | | | | WO | 2020191217 | A1 | 24 September 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210510603